# EUROPEAN PATENT APPLICATION

(11) **EP 4 610 461 A1**
(43) Date of publication of application: **03.09.2025**
(21) Application number: 22967000.5
(22) Date of filing: 13.12.2022
(51) Int. Cl.: E05F 3/12, F15B 15/22, F16F 9/19

(54) **VARIABLE-SPEED BUFFER OIL CYLINDER**

(30) Priority: 30.11.2022 CN 202211519861
(71) Applicant: Guangdong Zhaogao Metal Technology Co., Ltd., Zhaoqing, Guangdong 526100 (CN)
(72) Inventor: WU, Bincheng, Zhaoqing, Guangdong 526105 (CN)
(74) Representative: Bratovic, Nino Maria
(86) International application number: PCT/CN2022/138675
(87) International publication number: WO 2024/113415

(57) **Abstract**

Disclosed in the present invention is a variable-speed buffer oil cylinder, comprising a housing and a piston, wherein the housing is provided with an inner cavity, and is provided with an opening in the top thereof; a variable-diameter oil needle, which is vertically arranged towards the opening, is provided on a bottom surface of the inner cavity; the piston comprises a plunger portion, which fits the inner cavity in a moveable manner, and a piston rod portion, which is connected to the plunger portion and extends from the opening; the plunger portion divides the inner cavity into an upper oil cavity and a lower oil cavity; the piston is provided with a first oil channel, which is in communication with the upper oil cavity and the lower oil cavity; the variable-diameter oil needle fits the first oil channel; and a check valve is arranged on the plunger portion. As the diameter of the variable-diameter oil needle is variable, when closed, a door leaf using the variable-speed buffer oil cylinder of the present invention can realise non-uniform motion; thus, the matching door leaf realises non-uniform motion when closed, thereby providing convenience for a user.

## Description

### TECHNICAL FIELD

The present disclosure relates to the field of hydraulic oil cylinders, and in particular, to a variable-speed buffer oil cylinder.

### BACKGROUND

Currently, self-closing hinges and pivots on the market are often used cooperatively on hydraulic buffer oil cylinders. For example, the self-resetting oil cylinder used in Chinese Patent CN210888511U exhibits a uniform axial motion of a piston rod portion under the same external force applied to a reset part, which makes a matching product in a uniform speed closing state during automatic closing. Due to closing at a uniform and slow speed, a locking force is insufficient when a door leaf is closed, and the door leaf cannot be locked smoothly. In addition, the door leaf is closed slowly throughout the entire process, leading to too long closing time.

### SUMMARY

The present disclosure aims to solve at least one of the technical problems in the existing technology. To this end, a variable-speed buffer oil cylinder capable of achieving a non-uniform motion is proposed, such that a matching door leaf achieves the non-uniform motion when closed, providing convenience to users.

The technical solution used by the present disclosure to solve the technical problem is as follows.

A variable-speed buffer oil cylinder includes a housing and a piston. The housing is configured to have an inner cavity and provided with an opening at a top of the housing, where a variable-diameter oil needle vertically arranged towards the opening is disposed on a bottom surface of the inner cavity. The piston includes a plunger movably fitted with the inner cavity and a piston rod connected to the plunger and extending out of the opening. The plunger divides the inner cavity into an upper oil chamber and a lower oil chamber. The piston is provided with a first oil channel in communication with the upper oil chamber and the lower oil chamber, the variable-diameter oil needle cooperates with the first oil channel, and a check valve is arranged on the plunger.

According to an embodiment of the present disclosure, the variable-speed buffer oil cylinder has at least the following beneficial effects. According to different door leaf structures, when the door leaf is opened, the piston can be driven to move upward or downward by the piston rod. The following assumes that the piston is driven to move upward by the piston rod when the door leaf is opened. In this case, the check valve should be oriented to allow flow from the upper oil chamber to the lower oil chamber, such that the hydraulic oil in the upper oil chamber mainly flows to the lower oil chamber through the check valve. At this stage, the piston is positioned at an upper part of the inner cavity of the housing. When the door is closed, the reset part on the door leaf provides an external force to push the piston rod to move downward, thereby driving the plunger to move downward. The hydraulic oil in the lower oil chamber flows to the upper oil chamber from a gap between the variable-diameter oil needle and a port of the first oil channel. Since the diameter of the variable-diameter oil needle is variable, the gap between the variable-diameter oil needle and the port of the first oil channel also varies. This configuration enables a non-uniform motion, such that the matching door leaf achieves the non-uniform motion when closed, providing convenience to users. For example, it can achieve a faster closing speed at the beginning stage, a slower closing speed at the middle stage, thereby realizing a buffering effect. When approaching complete closure, the door leaf can be closed slightly faster, giving the door leaf an impact force to close and lock smoothly. Alternatively, the door leaf may be closed faster at the beginning closing stage, slightly slower at the middle stage, and then much slower at the final stage, to achieve silent closing of the door leaf, and reduce the closing time, making it less likely for the indoor temperature to be lost, thus achieving an energy-saving effect. For these two cases, specific embodiments are provided below for illustration.

If the door leaf drives the piston to move downward through the piston rod when opening the door, the direction of the check valve is opposite. The hydraulic oil in the lower oil chamber mainly flows from the check valve to the upper oil chamber. In this case, the piston is positioned at a lower part of the inner cavity of the housing. When closing the door, the reset part on the door leaf provides an external force to push the piston rod to move upward, thereby driving the plunger to move upward. The hydraulic oil in the upper oil chamber flows to the lower oil chamber from the gap between the variable-diameter oil needle and the port of the first oil channel. Since the diameter of the variable-diameter oil needle is variable, the gap between the variable-diameter oil needle and the port of the first oil channel also varies, which can also achieve the non-uniform motion.

According to some embodiments of the present disclosure, the first oil channel includes a blind hole oil channel extending from a bottom surface of the plunger to an interior of the piston rod and a side hole channel provided on a side of the piston rod and in communication with the blind hole oil channel; and the variable-diameter oil needle cooperates with the blind hole oil channel.

Beneficially, the first oil channel is designed with a reasonable structure, which facilitates cooperation with the variable-diameter oil needle. When the piston moves downward, the hydraulic oil in the lower oil chamber flows to the blind hole oil channel from the gap between the variable-diameter oil needle and a port of the blind hole oil channel, and then flows to the upper oil chamber through the side hole channel.

According to some embodiments of the present disclosure, the plunger is provided with a convex ring step that narrows the port of the blind hole oil channel, and the convex ring step is provided with a through hole that allows the variable-diameter oil needle to enter the blind hole oil channel.

Beneficially, the convex ring step enables the port of the blind hole oil channel to reduce, which can improve the oil pressure of the pressurized oil chamber and thus improve the buffering effect. In addition, due to the small size of the through hole in the convex ring step, the flow of the hydraulic oil can be controlled more accurately according to the diameter change of the variable-diameter oil needle when the piston is moving, to achieve the speed control based on the change of the variable-diameter oil needle.

According to some embodiments of the present disclosure, the check valve is oriented to allow flow from the upper oil chamber to the lower oil chamber, and a diameter of the variable-diameter oil needle increases from top to bottom.

Beneficially, when closing the door, the reset part on the door leaf provides an external force to push the piston rod to move downward, thereby driving the plunger to move downward. The gap between the variable-diameter oil needle and the port of the blind hole oil channel also decreases. As a result, the door leaf may be closed faster at the beginning closing stage, slightly slower at the middle stage, and then much slower at the final stage, to achieve silent closing of the door leaf, and reduce the closing time, making it less likely for the indoor temperature to be lost, thus achieving an energy-saving effect.

According to some embodiments of the present disclosure, the variable-diameter oil needle is divided into an upper section and a lower section, and an oil channel ring groove is provided on a periphery of the lower section.

Beneficially, the gap between the variable-diameter oil needle and the port of the blind hole oil channel decreases and then increases. As a result, it can achieve a faster closing speed at the beginning stage, a slower closing speed at the middle stage, thereby realizing a buffering effect. When approaching complete closure, the door leaf can be closed slightly faster, giving the door leaf an impact force to close and lock smoothly.

According to some embodiments of the present disclosure, the opening is provided with a first sealing ring, and the first sealing ring is in sliding fit with the piston rod.

Beneficially, the arrangement of the first sealing ring achieves a sealing effect, preventing the hydraulic oil from leaking from the gap between the opening and the piston rod.

According to some embodiments of the present disclosure, a sealing ring groove is provided on a periphery of the plunger, and a second sealing ring is provided on the sealing ring groove.

Beneficially, the arrangement of the second sealing ring provides a sealing effect, preventing the hydraulic oil from passing through the gap between the plunger and the inner cavity.

According to some embodiments of the present disclosure, an oil passing hole in communication with a bottom surface and a side surface of the sealing ring groove is provided on one of a top surface and a bottom surface of the plunger, an oil return channel in communication with the side surface of the sealing ring groove is provided on another one of the top surface and the bottom surface of the plunger, and the sealing ring groove, the second sealing ring, the oil passing hole, and the oil return channel form the check valve.

Beneficially, due to this arrangement of the check valve, no additional parts are required. Assuming that the oil passing hole is provided at the bottom surface of the plunger and the oil return channel is provided at the top surface of the plunger, when the piston moves upward, the hydraulic oil in the upper oil chamber enters from the oil return channel, to push the second sealing ring to slide downward, and the hydraulic oil can enter the oil passing hole through the bottom surface of the sealing ring groove and then flow into the lower oil chamber. When the piston moves downward, the hydraulic oil in the lower oil chamber enters from the oil passing hole, to push the second sealing ring to slide upward, thereby blocking the oil return channel on the side surface of the sealing ring groove. As a result, the hydraulic oil cannot pass through.

According to some embodiments of the present disclosure, the check valve includes a valve cavity disposed in the plunger and a valve core disposed in the valve cavity.

Beneficially, through this arrangement, the check valve is simple in structure and operates stably.

According to some embodiments of the present disclosure, the lower oil chamber is provided with a return spring that is sleeved over the variable-diameter oil needle.

Beneficially, when the external force is removed, the return spring pushes the piston to move upward for resetting. It is to be noted that the driving force of the reset part matched with the hydraulic oil cylinder on the door leaf is much greater, and a spring force of the return spring will hardly affect the power output during door closing.

### BRIEF DESCRIPTION OF DRAWINGS

The above and/or additional aspects and advantages of the present disclosure will become apparent and readily understood from the description of the embodiments in conjunction with the accompanying drawings, in which:
FIG. 1 is a schematic structural diagram according to a first embodiment of the present disclosure;
FIG. 2 is a schematic structural diagram of a piston shown in FIG. 1;
FIG. 3 is a schematic structural diagram according to a second embodiment of the present disclosure;
FIG. 4 is a schematic structural diagram of a plunger shown in FIG. 3; and
FIG. 5 is a schematic structural diagram according to a third embodiment of the present disclosure.

Reference numerals: housing 100; inner cavity 110; Opening 120; variable-diameter oil needle 130; piston 140; plunger 150; piston rod 160; upper oil chamber 170; lower oil chamber 180; blind hole oil channel 190; side hole channel 200; convex ring step 210; through hole 220; oil channel ring groove 230; first sealing ring 240; sealing ring groove 250; second sealing ring 260; oil passing hole 270; oil return channel 280; valve cavity 290; valve core 300; return spring 310.

### DETAILED DESCRIPTION

Embodiments of the present disclosure are described in detail below, the examples of which embodiment are shown in the accompanying drawings. The same or similar numerals throughout indicate the same or similar elements or elements with same or similar function. The embodiments described with reference to the accompanying drawings are exemplary, which are merely used to explain the present disclosure, instead of being understood as a limitation to the present disclosure.

In the description of the present disclosure, it is to be understood that if involving in orientation descriptions, orientation or position relationships indicated by terms such as "upper", "lower", "front", "rear", "left", and "right", and the like are based on the orientation or position relationships as shown in the accompanying drawings, for ease of describing the present disclosure and simplifying the description only, rather than indicating or implying that the mentioned apparatus or element necessarily has a particular orientation and must be constructed and operated in the particular orientation. Therefore, these terms should not be understood as limitations to the present disclosure.

In the description of the present disclosure, the meaning of "several" is one or more, the meaning of "a plurality" is two or more, "greater than", "less than", "exceeding" and the like are understood as excluding the specified number, and "above", "below", "within" and the like are understood as including the specified number. The described "first" and "second" are merely used for distinguishing technical features, instead of being understood as indicating or implying relative importance or impliedly indicating the quantity of the showed technical features or impliedly indicating the precedence relationship of the showed technical features.

In the description of the present disclosure, it is also noted that, unless specific regulation and limitation otherwise, terms "mount", "join" and "connect" should be generally understood, for example, may a fixed connection, or a detachable connection, or an integrated connection, may a mechanical connection or an electric connection, may be a direct connection or an indirect connection through an intermediation, and may be an internal connection of two elements. Those of ordinary skill in the art may understand the specific meaning of the terms in the present disclosure according to specific conditions.

A variable-speed buffer oil cylinder according to an embodiment of the present disclosure is described below with reference to the accompanying drawings.

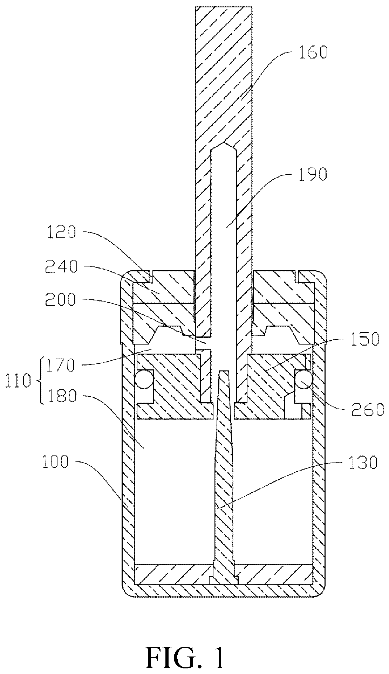

Referring to FIGS. 1-2, a variable-speed buffer oil cylinder includes a housing 100 and a piston 140.

The housing 100 is configured to have an inner cavity 110 and provided with an opening 120 at a top of the housing, and a variable-diameter oil needle 130 vertically arranged towards the opening 120 is disposed on a bottom surface of the inner cavity 110. The piston 140 includes a plunger 150 movably fitted with the inner cavity 110 and a piston rod 160 connected to the plunger 150 and extending out of the opening 120. The plunger 150 divides the inner cavity 110 into an upper oil chamber 170 and a lower oil chamber 180. The piston 140 is provided with a first oil channel in communication with the upper oil chamber 170 and the lower oil chamber 180, the variable-diameter oil needle 130 cooperates with the first oil channel, and a check valve is arranged on the plunger 150.

According to different door leaf structures, when the door leaf is opened, the piston 140 can be driven to move upward or downward by the piston rod 160. The following assumes that the piston 140 is driven to move upward by the piston rod 160 when the door leaf is opened. In this case, the check valve should be oriented to allow flow from the upper oil chamber 170 to the lower oil chamber, such that the hydraulic oil in the upper oil chamber 170 mainly flows to the lower oil chamber 180 through the check valve. At this stage, the piston 140 is positioned at an upper part of the inner cavity 110 of the housing 100. When the door is closed, the reset part on the door leaf provides an external force to push the piston rod 160 to move downward, thereby driving the plunger 150 to move downward. The hydraulic oil in the lower oil chamber 180 flows to the upper oil chamber 170 from a gap between the variable-diameter oil needle 130 and a port of the first oil channel. Since the diameter of the variable-diameter oil needle 130 is variable, the gap between the variable-diameter oil needle 130 and the port of the first oil channel also varies. This configuration enables a non-uniform motion, such that the matching door leaf achieves the non-uniform motion when closed, providing convenience to users. For example, it can achieve a faster closing speed at the beginning stage, a slower closing speed at the middle stage, thereby realizing a buffering effect. When approaching complete closure, the door leaf can be closed slightly faster, giving the door leaf an impact force to close and lock smoothly. Alternatively, the door leaf may be closed faster at the beginning closing stage, slightly slower at the middle stage, and then much slower at the final stage, to achieve silent closing of the door leaf, and reduce the closing time, making it less likely for the indoor temperature to be lost, thus achieving an energy-saving effect. For these two cases, specific embodiments are provided below for illustration.

If the door leaf drives the piston 140 to move downward through the piston rod 160 when opening the door, the direction of the check valve is opposite. The hydraulic oil in the lower oil chamber 180 mainly flows from the check valve to the upper oil chamber 170. In this case, the piston 140 is positioned at a lower part of the inner cavity 110 of the housing 100. When closing the door, the reset part on the door leaf provides an external force to push the piston rod 160 to move upward, thereby driving the plunger 150 to move upward. The hydraulic oil in the upper oil chamber 170 flows to the lower oil chamber 180 from the gap between the variable-diameter oil needle 130 and the port of the first oil channel. Since the diameter of the variable-diameter oil needle 130 is variable, the gap between the variable-diameter oil needle 130 and the port of the first oil channel also varies, which can also achieve the non-uniform motion.

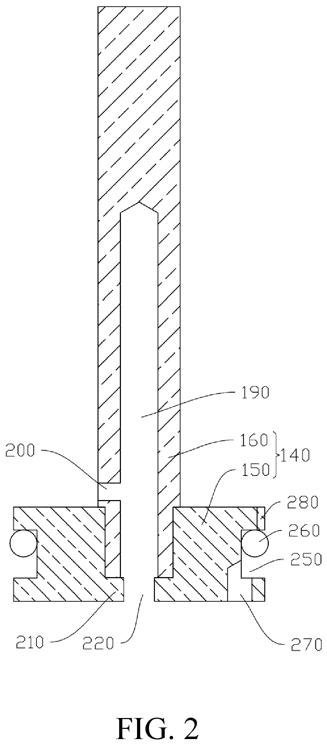

Specifically, as shown in FIG. 2, the first oil channel includes a blind hole oil channel 190 extending from the bottom surface of the plunger 150 to an interior of the piston rod 160, and a side hole channel 200 provided on a side of the piston rod 160 and in communication with the blind hole oil channel 190. The variable-diameter oil needle 130 cooperates with the blind hole oil channel 190. The first oil channel is designed with a reasonable structure, which facilitates cooperation with the variable-diameter oil needle 130. When the piston 140 moves downward, the hydraulic oil in the lower oil chamber 180 flows to the blind hole oil channel 190 from the gap between the variable-diameter oil needle 130 and a port of the blind hole oil channel 190, and then flows to the upper oil chamber 170 through the side hole channel 200.

In addition, the plunger 150 is provided with a convex ring step 210 that narrows the port of the blind hole oil channel 190, and the convex ring step 210 is provided with a through hole 220 that allows the variable-diameter oil needle 130 to enter the blind hole oil channel 190. The convex ring step 210 enables the port of the blind hole oil channel 190 to reduce, which can improve the oil pressure of the pressurized oil chamber and thus improve the buffering effect. In addition, due to the small size of the through hole 220 in the convex ring step 210, the flow of the hydraulic oil can be controlled more accurately according to the diameter change of the variable-diameter oil needle 130 when the piston 140 is moving, to achieve the speed control based on the change of the variable-diameter oil needle 130.

As shown in FIG. 1, in the first embodiment of the present disclosure, the check valve is oriented to allow flow from the upper oil chamber 170 to the lower oil chamber 180, and the diameter of the variable-diameter oil needle 130 increases from top to bottom. Thus, when closing the door, the reset part on the door leaf provides an external force to push the piston rod 160 to move downward, thereby driving the plunger 150 to move downward. The gap between the variable-diameter oil needle 130 and the port of the blind hole oil channel 190 also decreases. As a result, the door leaf may be closed faster at the beginning closing stage, slightly slower at the middle stage, and then much slower at the final stage, to achieve silent closing of the door leaf, and reduce the closing time, making it less likely for the indoor temperature to be lost, thus achieving an energy-saving effect.

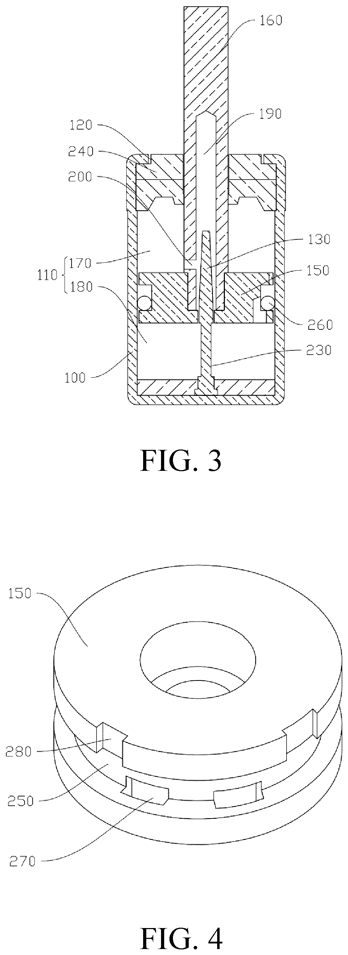

As shown in FIG. 3, in the second embodiment of the present disclosure, the variable-diameter oil needle 130 is divided into an upper section and a lower section, and an oil channel ring groove 230 is provided on a periphery of the lower section. Thus, the gap between the variable-diameter oil needle 130 and the port of the blind hole oil channel 190 decreases and then increases. As a result, it can achieve a faster closing speed, a slower closing speed at the middle stage, thereby realizing a buffering effect. When approaching complete closure, the door leaf can be closed slightly faster, giving the door leaf an impact force to close and lock smoothly.

It can be understood that, as shown in FIG. 2 and FIG. 4, the opening 120 is provided with a first sealing ring 240, and the first sealing ring 240 is in sliding fit with the piston rod 160. The arrangement of the first sealing ring 240 achieves a sealing effect, preventing the hydraulic oil from leaking from the gap between the opening 120 and the piston rod 160.

In addition, a sealing ring groove 250 is provided on a periphery of the plunger 150, and a second sealing ring 260 is provided on the sealing ring groove 250. The arrangement of the second sealing ring 260 provides a sealing effect, preventing the hydraulic oil from passing through the gap between the plunger 150 and the inner cavity 110.

Further, an oil passing hole 270 in communication with a bottom surface and a side surface of the sealing ring groove 250 is provided on one of a top surface and a bottom surface of the plunger 150, an oil return channel 280 in communication with the side surface of the sealing ring groove 250 is provided on another one of the top surface and the bottom surface of the plunger 150, and the sealing ring groove 250, the second sealing ring 260, the oil passing hole 270, and the oil return channel 280 form the check valve. Due to this arrangement of the check valve, no additional parts are required. As shown in FIG. 3, assuming that the oil passing hole 270 is provided at the bottom surface of the plunger 150 and the oil return channel 280 is provided at the top surface of the plunger 150, when the piston 140 moves upward, the hydraulic oil in the upper oil chamber 170 enters from the oil return channel 280, to push the second sealing ring 260 to slide downward, and the hydraulic oil can enter the oil passing hole 270 through the bottom surface of the sealing ring groove 250 and then flow into the lower oil chamber 180. When the piston 140 moves downward, the hydraulic oil in the lower oil chamber 180 enters from the oil passing hole 270, to push the second sealing ring 260 to slide upward, thereby blocking the oil return channel 280 on the side surface of the sealing ring groove 250. As a result, the hydraulic oil cannot pass through, as shown in FIG. 1. It is worth mentioning that at least one oil passing hole 270 and at least one oil return channel 280 are provided, to ensure the function of the check valve and prevent the failure of the check valve due to that one of the oil passing holes 270 or oil return channels 280 gets blocked.

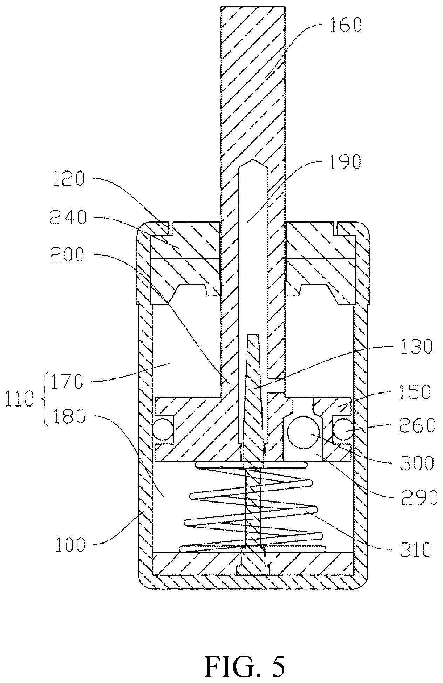

As shown in FIG. 5, in the third embodiment of the present disclosure, the check valve includes a valve cavity 290 disposed in the plunger 150 and a valve core 300 disposed in the valve cavity 290. Through this arrangement, the check valve is simple in structure and operates stably.

Preferably, the lower oil chamber 180 is provided with a return spring 310 that is sleeved over the variable-diameter oil needle 130. Thus, when the external force is removed, the return spring 310 pushes the piston 140 to move upward for resetting. It is to be noted that the driving force of the reset part matched with the hydraulic oil cylinder on the door leaf is much greater, and a spring force of the return spring 310 will hardly affect the power output during door closing.

In the description of the specification, the descriptions with reference to the terms such as "an embodiment", "some embodiments", "schematic embodiment", "example", "specific example", or "some examples" means that the specific characteristics, structures, materials or features described in combination with the embodiment(s) or example (s) are included in at least one embodiment or example of the present application. In this specification, the schematic expression of the above terms does not necessarily refer to the same embodiment or example. Moreover, the described specific characteristics, structures, materials or features may be combined in one or more embodiments or examples in a suitable manner.

The embodiments of the present disclosure are described in detail above in combination with the accompanying drawings. However, the present disclosure is not limited the above embodiments. Various changes may also be made within the knowledge scope of those having ordinary skills in the art without departing from the gist of the present disclosure.

## Claims

1. A variable-speed buffer oil cylinder, comprising:
a housing (100) configured to have an inner cavity (110) and provided with an opening (120) at a top of the housing, wherein a variable-diameter oil needle (130) vertically arranged towards the opening (120) is disposed on a bottom surface of the inner cavity (110); and
a piston (140) comprising a plunger (150) movably fitted with the inner cavity (110) and a piston rod (160) connected to the plunger (150) and extending out of the opening (120), wherein the plunger (150) divides the inner cavity (110) into an upper oil chamber (170) and a lower oil chamber (180), the piston (140) is provided with a first oil channel in communication with the upper oil chamber (170) and the lower oil chamber (180), the variable-diameter oil needle (130) cooperates with the first oil channel, and a check valve is arranged on the plunger (150).

2. The variable-speed buffer oil cylinder according to claim 1, wherein the first oil channel comprises a blind hole oil channel (190) extending from a bottom surface of the plunger (150) to an interior of the piston rod (160) and a side hole channel (200) provided on a side of the piston rod (160) and in communication with the blind hole oil channel (190); and the variable-diameter oil needle (130) cooperates with the blind hole oil channel (190).

3. The variable-speed buffer oil cylinder according to claim 2, wherein the plunger (150) is provided with a convex ring step (210) that narrows a port of the blind hole oil channel (190), and the convex ring step (210) is provided with a through hole (220) that allows the variable-diameter oil needle (130) to enter the blind hole oil channel (190).

4. The variable-speed buffer oil cylinder according to claim 1, wherein the check valve is oriented to allow flow from the upper oil chamber (170) to the lower oil chamber (180), and a diameter of the variable-diameter oil needle (130) increases from top to bottom.

5. The variable-speed buffer oil cylinder according to claim 4, wherein the variable-diameter oil needle (130) is divided into an upper section and a lower section, and an oil channel ring groove (230) is provided on a periphery of the lower section.

6. The variable-speed buffer oil cylinder according to claim 1, wherein the opening (120) is provided with a first sealing ring (240), and the first sealing ring (240) is in sliding fit with the piston rod (160).

7. The variable-speed buffer oil cylinder according to claim 1, wherein a sealing ring groove (250) is provided on a periphery of the plunger (150), and a second sealing ring (260) is provided on the sealing ring groove (250).

8. The variable-speed buffer oil cylinder according to claim 7, wherein an oil passing hole (270) in communication with a bottom surface and a side surface of the sealing ring groove (250) is provided on one of a top surface and a bottom surface of the plunger (150), an oil return channel (280) in communication with the side surface of the sealing ring groove (250) is provided on another one of the top surface and the bottom surface of the plunger (150), and the sealing ring groove (250), the second sealing ring (260), the oil passing hole (270), and the oil return channel (280) form the check valve.

9. The variable-speed buffer oil cylinder according to claim 7, wherein the check valve comprises a valve cavity (290) disposed in the plunger (150) and a valve core (300) disposed in the valve cavity (290).

10. The variable-speed buffer oil cylinder according to claim 4 or 5, wherein the lower oil chamber (180) is provided with a return spring (310) that is sleeved over the variable-diameter oil needle (130).
